(19) Europäisches Patentamt
European Patent Office
Office européen des brevets

(11) EP 3 101 069 B1

# (12) EUROPEAN PATENT SPECIFICATION

(45) Date of publication and mention of the grant of the patent:
**05.12.2018 Bulletin 2018/49**

(21) Application number: **15743127.1**

(22) Date of filing: **30.01.2015**

(51) Int Cl.:
***C09D 11/00*** *(2014.01)* ***B41J 2/01*** *(2006.01)*
***B41M 5/00*** *(2006.01)* ***C09D 11/30*** *(2014.01)*
***D06P 5/00*** *(2006.01)* ***D06P 5/30*** *(2006.01)*
***C09D 11/102*** *(2014.01)* ***C09D 11/328*** *(2014.01)*
***D06P 3/54*** *(2006.01)* ***D06P 1/52*** *(2006.01)*

(86) International application number:
**PCT/JP2015/052744**

(87) International publication number:
**WO 2015/115614 (06.08.2015 Gazette 2015/31)**

## (54) INKJET INK AND INKJET RECORDING METHOD

TINTENSTRAHLTINTE UND TINTENSTRAHLAUFZEICHNUNGSVERFAHREN

ENCRE POUR IMPRESSION À JET D’ENCRE ET PROCÉDÉ D’IMPRESSION À JET D’ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2014 JP 2014015502**

(43) Date of publication of application:
**07.12.2016 Bulletin 2016/49**

(73) Proprietor: **Konica Minolta, Inc.**
**Tokyo 100-7015 (JP)**

(72) Inventors:
- **KATO, Masami**
**Tokyo 100-7015 (JP)**
- **IWATA, Takashi**
**Tokyo 100-7015 (JP)**

(74) Representative: **Gille Hrabal**
**Brucknerstrasse 20**
**40593 Düsseldorf (DE)**

(56) References cited:
**EP-A1- 1 754 760**
**EP-A1- 2 641 943**
**EP-A2- 1 707 603**
**JP-A- 2001 139 849**
**JP-A- 2006 249 396**
**JP-A- 2007 154 021**
**JP-A- 2011 046 035**
**US-A1- 2010 196 601**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 101 069 B1

## Description

### Technical Field

The present invention relates to an inkjet ink and an inkjet recording method.

### Background Art

An image printing method by an inkjet system is a method of discharging micro ink droplets from inkjet recording heads, and landing the micro ink droplets on a recording medium which is a printing subject. The inkjet system is advantageous in its relatively simple and inexpensive mechanism and being capable of forming a high-definition and high-quality image. Developments have been in progress also for so-called inkjet printing methods which perform image formation on a cloth by the inkjet system.

Various inkjet inks are known which are also applicable to the inkjet printing method. Examples of proposed inkjet inks include an inkjet ink containing a disperse dye, a polymer resin having an acid value of 80 mgKOH/g or more to 300 mgKOH/g or less, a polyether-modified polysiloxane compound as a silicone-based surfactant, and a water-soluble organic solvent (e.g., PTL 1); an inkjet ink containing carbon black, a dispersant, an organic silicone compound as an antifoaming agent, an organic solvent, and water (e.g., PTL 2); and an inkjet ink containing a disperse dye (a), two or more wetting agents (b) such as a silicone compound and an acetylene diol compound, a dispersant (c), and water (e.g., PTL 3).

Thus, an inkjet ink containing a water-insoluble coloring material such as a disperse dye is designed to disperse the disperse dye by pulverizing or crumbling an aggregate or a crystal of the coloring material with the application of energy to the coloring material in the manufacturing process (see, e.g., PTL 4).

### Citation List

#### Patent Literature

PTL 1
Japanese Patent Application Laid-Open No. 2008-291079
PTL 2
Japanese Patent Application Laid-Open No. 9-31380
PTL 3
Japanese Translation of a PCT Application Laid-Open No. 2007-523986
PTL 4
Japanese Patent Application Laid-Open No. 8-48906

### Summary of Invention

#### Technical Problem

However, in the inkjet inks containing a water-insoluble coloring material such as a disperse dye (in particular, the inks of PTLs 2 to 4), sometimes aggregation of coloring material particles, crystal growth, or the like may occur depending on storing conditions or the influence of additives in the ink, thus lowering the disperse stability. While the reason for this still remains unclear, it is considered that there are portions not covered with a dispersant on the surface of the coloring material particles, at which portions as a base point the coloring material particles easily aggregate together and the crystal growth of dyes are easily promoted. Such lowering of disperse stability causes the lowering of various performances of an inkjet ink such as discharge stability, thus easily leading to difficulty in obtaining a high-quality image.

The present invention has been achieved in view of the above-described circumstances, and an object of the present invention is to provide an inkjet ink having high disperse stability and various favorable performances such as discharge stability, even when containing a water-insoluble coloring material.

#### Solution to Problem

[1] An inkjet ink containing at least a water-insoluble coloring material, a dispersant, a polysiloxane compound, a water-soluble organic solvent, and water,
in which
the polysiloxane compound contains both a compound represented by General Formula (1) and a compound represented by General Formula (2):

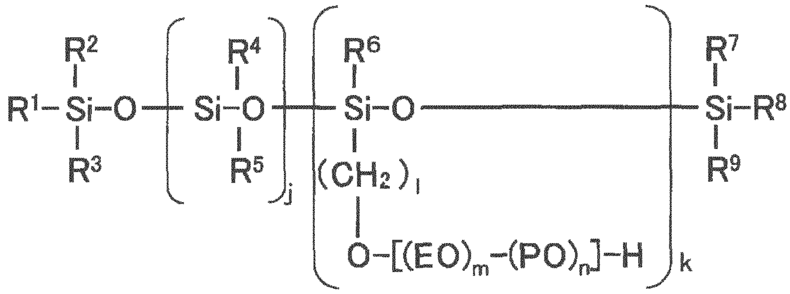

... General Formula (1)

wherein:

$R^1$ to $R^9$ each independently represents a $C_1$-$C_6$ alkyl group, a $C_1$-$C_6$ hydroxyalkyl group, or an aryl group;
j represents an integer of 0 or more;
k and l each independently represents an integer of 1 or more;
EO represents an ethyleneoxy group, PO represents a propyleneoxy group, and arrangement of the EO and the PO inside brackets are in an arbitrary order, thereby forming a random or block structure; and
m and n each independently represents an integer of 0 or more, wherein total value of m and n is an integer of 1 or more, and

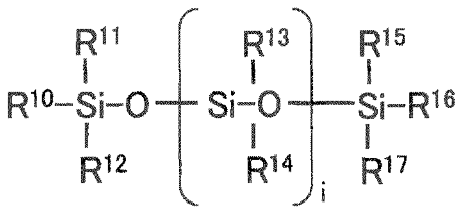

... General Formula (2)

wherein:

$R^{10}$ to $R^{17}$ each independently represents a $C_1$-$C_6$ alkyl group, a $C_1$-$C_6$ hydroxyalkyl group, or an aryl group; and
i represents an integer of 1 or more and wherein the water-insoluble coloring material is a disperse dye and wherein the total amount of the compound represented by General Formula (1) and the compound represented by General Formula (2) is 0.05 mass% or more to 1 mass% or less based on a total mass of the inkjet ink and wherein the content of the compound represented by General Formula (2) is 5 mass% or more to 40 mass% or less based on the total mass of the compound represented by General Formula (1) and the compound represented by General Formula (2).

[2] The inkjet ink according to [1], in which total value of j and k of the General Formula (1) is different from the value of i in the General Formula (2).
[3] The inkjet ink according to any one of [1] to [2], in which the water-soluble organic solvent contains at least one of polyalkylene glycols and glycol ethers.
[4] The inkjet ink according to any one of [1] to [3], in which the dispersant is an acrylic resin having an acid value of 10 mgKOH/g or more to 150 mgKOH/g or less.
[5] The inkjet ink according to any one of [1] to [4], in which the inkjet ink contains as the disperse dye at least one member selected from the group consisting of C.I. Disperse Blue 60, C.I. Disperse Red 343, and Disperse Red 177.
[6] An inkjet recording method which includes discharging droplets of the inkjet ink according to any one of [1] to [5] from an inkjet recording head onto a cloth.

[7] The inkjet recording method according to [6], in which the cloth is a polyester cloth subjected to an acidic pretreatment.

Advantageous Effects of Invention

According to the present invention, it is possible to provide an inkjet ink having high disperse stability and various favorable performances such as discharge stability, even when containing a water-insoluble coloring material.

Brief Description of Drawings

FIG. 1 is a partial schematic diagram illustrating an example of a configuration of an inkjet printing apparatus.

Description of Embodiments

As described above, the disperse stability of an ink containing a water-insoluble coloring material sometimes may be lowered due to aggregation of coloring material particles, crystal growth, or the like depending on storing conditions or additives in the ink. To overcome the problem, the present inventors have conducted extensive studies, and as a result have found that, by adding a polysiloxane compound having a hydrophilic moiety (a compound represented by General Formula (1)) and a polysiloxane compound not having a hydrophilic moiety (a compound represented by General Formula (2)) in combination to an ink containing a water-insoluble coloring material, it becomes possible to effectively suppress the aggregation of coloring material particles and the crystal growth of dyes in the ink.

While the reason for this still remains unclear, it can be considered as follows. That is, it is considered that, when the length of a main chain is constant, the compound represented by General Formula (2) has higher hydrophobicity than the compound represented by General Formula (1), and is more likely to be adsorbed to the surface of the coloring material particles. Thus, it is deduced that the compound represented by General Formula (2) can complementarily cover a portion on the surface of the coloring material particles not covered with a dispersant, making it possible to suppress the aggregation of the coloring material particles and the crystal growth. On the other hand, the compound represented by General Formula (1) is considered to have a smaller effect in covering the surface of the coloring material particles than the compound represented by General Formula (2), but has certain degree of hydrophilicity, so that the compound represented by General Formula (1) is easily dissolved in the ink, thus easily increasing the amount of addition. Accordingly, it is considered that, by using the compound represented by General Formula (1) and the compound represented by General Formula (2) in combination, it becomes possible to sufficiently covering the surface of the coloring material particles without impairing the solubility in the ink, thus suppressing the aggregation of the coloring material particles and the crystal growth to a higher degree. The present invention has been achieved based on such findings.

That is, the inkjet ink of the present invention contains a water-insoluble coloring material that is a disperse dye, a dispersant, a polysiloxane compound, a water-soluble organic solvent, and water; and the polysiloxane compound preferably contains both a compound represented by General Formula (1) and a compound represented by General Formula (2).

1. Inkjet Ink

As described above, the inkjet ink of the present invention contains at least a water-insoluble coloring material that is a disperse dye, a dispersant, a polysiloxane compound, a water-soluble organic solvent, and water.

<Water-Insoluble Coloring Material>

The water-insoluble coloring material is a disperse dye.

Examples of the disperse dye include:

C.I. Disperse Yellow: 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232,

C.I. Disperse Orange: 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, 142,

C.I. Disperse Red: 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185,

188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328, 337, 343,

C.I. Disperse Violet: 1, 4, 8, 23, 26, 27, 28, 31, 33, 35, 36, 38, 40, 43, 46, 48, 50, 51, 52, 56, 57, 59, 61, 63, 69, 77,

C.I. Disperse Green 9,

C.I. Disperse Brown: 1, 2, 4, 9, 13, 19,

C.I. Disperse Blue: 3, 7, 9, 14, 16, 19, 20, 26, 27, 35, 43, 44, 54, 55, 56, 58, 60, 62, 64, 71, 72, 73, 75, 77, 79, 79:1, 79:2, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 281, 284, 285, 287, 288, 291, 291:1, 293, 295, 297, 301, 315, 330, 333, 373, and

C.I. Disperse Black: 1, 3, 10, 24.

Among those, from the viewpoint of favorably maintaining the disperse stability of a dye over time, the disperse dye preferably contains at least one of C.I. Disperse Blue 60 and C.I. Disperse Red 343.

Conventionally known organic pigments or inorganic pigments can also be used which, however, is not in accordance with the invention. Examples of the organic pigments include: azo pigments such as azo lakes, insoluble azo pigments, condensed azo pigments, and chelate azo pigments; polycyclic pigments such as phthalocyanine pigments, perylene and perylene pigments, anthraquinone pigments, quinacridone pigments, dioxazine pigments, thioindigo pigments, isoindolinone pigments, and quinophthalone pigments; dye lakes such as basic dye lakes and acidic dye lakes; nitro pigments; nitroso pigments; aniline black; and daylight fluorescent pigments. Examples of the inorganic pigments include carbon black and titanium oxide.

Specific examples of the organic pigments include:

C.I. Pigment Yellow: 1, 3, 12, 13, 14, 16, 17, 43, 55, 74, 81, 83, 109, 110, 120, 138,

C.I. Pigment Orange: 1:3, 16, 34, 43,

C.I. Pigment Red: 2, 5, 8, 12, 17, 22, 23, 41, 112, 114, 122, 123, 146, 148, 149, 150, 166, 170, 220, 238, 245, 258,

C.I. Pigment Violet: 19, 23,

C.I. Pigment Blue: 15, 15:1, 15:3, 15:5, 29, and

C.I. Pigment Brown 22.

Examples of black pigments include C.I. Pigment Black: 1, 5, 7, and the like, other than the carbon black; examples of white pigments include C.I. Pigment White 6, and the like, other than the titanium oxide.

The water-insoluble coloring material can be a dispersion obtained by applying various processing to coloring material particles, in order to maintain a stable dispersion state in an aqueous inkjet ink. Any dispersion is possible as long as the coloring material particles can be kept dispersed stably in an aqueous dispersion medium. The dispersion either may be, for example, a dispersion obtained by treating coloring material particles so as to be dispersible with a dispersant (preferably a dispersed polymer resin) to be described later; or may be a dispersion designed to be dispersible without using a dispersant by chemically modifying the surface of coloring material particles.

The content of the coloring material can be set at 0.3 mass% or more to 20 mass% or less, and preferably 0.5 mass% or more to less than 10 mass% based on the total mass of the ink. When the content of the coloring material is at a certain level or higher, the density of an image to be obtained can be increased. On the other hand, when the content of the coloring material is at a certain level or lower, the viscosity of the ink does not increase excessively, so that the discharge stability is less likely to be impaired.

<Dispersant>

The dispersant is a dispersed resin for allowing a water-insoluble coloring material to be easily dispersed in water, and may also function as a binder resin for fixing the coloring material or the like to a recording medium.

As the dispersed resin, known polymer dispersants or the like can be used. Among those, water-soluble resins are preferable as the dispersed resin, and those having a hydrophobic unit and a hydrophilic unit in a well-balanced manner are more preferable. The hydrophilic unit is preferably an ionic one, and more preferably an anionic one. It is preferable that the anionic hydrophilic unit is further neutralized with a volatilizable basic component.

Examples of such water-soluble resins include acrylic resin, polyvinyl alcohol resin, polyurethane resin, and polyester resin. The acrylic resin in the present invention is a resin having (meth)acrylic ester or (meth)acrylic acid as a monomer component; examples thereof also include styrene-acrylic resin, acrylonitrile-acrylic resin, and vinyl acetate-acrylic resin. Among those, a resin having a hydrophobic monomer unit and a hydrophilic monomer unit is preferable.

Examples of the hydrophobic monomer include: acrylic acid alkyl esters such as n-butyl acrylate, 2-ethylhexyl acrylate, and 2-hydroxyethyl acrylate (preferably acrylic acid $C_1$-$C_{12}$ alkyl ester); methacrylic acid alkyl esters such as

ethyl methacrylate, butyl methacrylate, and glycidyl methacrylate (preferably methacrylic acid $C_1$-$C_{12}$ alkyl ester); aromatic vinyl compounds such as styrene, α-methylstyrene, and substituted styrene; α,β-unsaturated nitriles such as acrylonitrile, and methacrylonitrile; vinyl acetate, vinyl butyrate, and vinyl benzoate. Among those, acrylic acid alkyl esters, methacrylic acid alkyl esters, and aromatic vinyl compounds are preferable. The hydrophobic monomer may be used singly or in combination.

Examples of the hydrophilic monomer include: α,β-unsaturated acids such as acrylic acid, and methacrylic acid; unsaturated group-containing dicarboxylic acids such as maleic acid, fumaric acid and itaconic acid, or monoesters thereof; and vinyl acetate; and acrylic amides. Among those, α,β-unsaturated acids such as acrylic acid, and methacrylic acid are preferable. The hydrophilic monomer may be used singly or in combination.

Specific examples of the resin having the hydrophobic monomer unit and the hydrophilic monomer unit include styrene-acrylic acid-acrylic acid alkyl ester copolymers, styrene-acrylic acid copolymers, styrene-maleic acid copolymers, styrene-maleic acid-acrylic acid alkyl ester copolymers, styrene-methacrylic acid copolymers, styrene-methacrylic acid-acrylic acid alkyl ester copolymers, styrene-maleic acid half ester copolymers, vinyl naphthalene-acrylic acid copolymers, and vinyl naphthalene-maleic acid copolymers. Examples of commercially products thereof include JONCRYL series such as JONCRYL 586 (manufactured by BASF Japan Ltd.), JONCRYL 67 (manufactured by BASF Japan Ltd.), and JONCRYL 819 (manufactured by BASF Japan Ltd.).

Among those, the resin having the hydrophobic monomer unit and the hydrophilic monomer unit is preferably a resin having at least an acrylic acid unit or a methacrylic acid unit as the hydrophilic monomer unit.

An acidic group derived from an acidic group-containing monomer such as acrylic acid or methacrylic acid, of the dispersed resin is preferably neutralized partially or completely with a basic component. As the neutralizing base, alkali metal-containing bases (e.g., sodium hydroxide, potassium hydroxide, and the like), or amines (e.g., ammonia, alkanol amine, alkyl amine, and the like) can be used. Among those, amines having a boiling point of less than 200°C are preferable for neutralization from the viewpoint of enhancing image durability.

The acid value of the dispersed resin is preferably 10 mgKOH/g or more to 300 mgKOH/g or less, and more preferably 10 mgKOH/g or more to 150 mgKOH/g or less. When the acid value of the dispersed resin is at a certain level or higher, high solubility in water or a water-soluble organic solvent is more likely to be obtained. On the other hand, when the acid value of the dispersed resin is at a certain level or lower, the hydrophilicity relative to the surface of the coloring material particles having hydrophobicity is less likely to be impaired.

The acid value of the dispersed resin refers to a milligram value (mgKOH/g) of potassium hydroxide required for neutralizing acidic components contained in 1 g of the dispersed resin; and can be determined by measurement of the acid value in accordance with JIS K0070.

The measurement of the acid value in accordance with JIS K0070 can be performed according to the following methods. That is, 10 g of resin is weighed into a 300 mL Erlenmeyer flask, and about 50 ml of a mixed solvent of ethanol:benzene = 1:2 is added thereto to dissolve the resin. Next, the solution is titrated with a 0.1 mol/L potassium hydroxide ethanol solution having been standardized in advance, using a phenolphthalein indicator. Then, the acid value (mgKOH/g) is determined from the amount of the potassium hydroxide ethanol solution used for titration, according to the following calculation formula (1).

When the resin is not dissolved in about 50 ml of the mixed solvent of ethanol:benzene = 1:2, either a solvent, which allows the resin to be dissolved therein, of 50 ml of ethanol or about 50 ml of a mixed solvent of ethanol/pure water = 1:1 is used to perform a similar titration.

Calculation Formula (1)

$$A = (B \times f \times 5.611)\ /S$$

where A is an acid value (mgKOH/g) of the resin, B is an amount of the 0.1 mol/L potassium hydroxide ethanol solution used the for titration, f is a factor of the 0.1 mol/L potassium hydroxide ethanol solution, S is a mass (g) of the resin, and 5.611 is a 1/10 value of the formula weight of potassium hydroxide (56.11/10).

The weight average molecular weight of the dispersed resin is preferably 3,000 to 30,000, and more preferably 7,000 to 20,000. When the weight average molecular weight is 3,000 or more, not only the effect of enhancing the dispersibility of the coloring material is more likely to be obtained, but also the capacity of the ink to be fixed to a recording medium is more likely to be enhanced. On the other hand, when the weight average molecular weight (Mw) is 30,000 or less, the viscosity of the ink does not increase excessively, so that the discharge stability is less likely to be impaired.

The weight average molecular weight of the dispersed resin can be measured using gel permeation chromatography. The measurement conditions can be as follows:

(Measurement Conditions)

| | |
|---|---|
| Solvent | : Tetrahydrofuran |
| Column | : TSK gel G4000 + 2500 + 2000 HXL manufactured by Tosoh Corporation |
| Column temperature | : 40°C |
| Injection amount | : 100 μl |
| Detector | : RI Model 504 (manufactured by GL Sciences Inc.) |
| Pump | : L6000 (manufactured by Hitachi, Ltd.) |
| Flow rate | : 1.0 ml/min |
| Calibration curve | : Calibration curve by 13 samples of standard polystyrene STK (manufactured by Tosoh Corporation) having Mw = 1,000,000 to 500 is used. 13 samples are used in an approximately equal interval. |

The glass transition temperature (Tg) of the dispersed resin is preferably -30°C to 100°C, and more preferably -20°C to 80°C.

Specific examples of the dispersed resin include JONCRYL 67, 586, 819 (which are manufactured by BASF Japan Ltd.; water-soluble high-molecular compounds), DISPERBYK-190 (manufactured by BYK Japan KK).

The content of the dispersed resin is preferably 0.5 mass% or more to 10 mass% or less, and more preferably 1 mass% or more to 6 mass% or less based on the total mass of the ink. When the content of the dispersed resin is at a certain level or higher, not only the dispersibility of the coloring material can be sufficiently enhanced, but also the dispersed resin functions sufficiently as a binder. That is, the increase in viscosity (lowering of fluidity) after the landing of the ink can be immediately achieved, so that ink mixing or the like can be suppressed. On the other hand, when the content of the dispersed resin is at a certain level or lower, the viscosity of the ink does not increase excessively, so that the discharge stability is less likely to be impaired.

As for the mass ratio between the coloring material and the dispersed resin, coloring material/dispersed resin is preferably 100/150 to 100/15. When the ratio of the dispersed resin is at a certain level or higher, coloring material particles are more likely to be dispersed favorably. When the ratio of the dispersed resin is at a certain level or lower, there is no concern that the viscosity of the ink may increase excessively. From the viewpoints of image durability and of enhancing the discharge stability of the ink, the mass ratio therebetween is more preferably 100/100 to 100/20.

<Polysiloxane Compound>

The polysiloxane compound preferably contains a polysiloxane compound having a hydrophilic moiety and a polysiloxane compound not having a hydrophilic moiety. The polysiloxane compound having a hydrophilic moiety is preferably a polyether-modified polysiloxane compound, and can be more preferably a compound represented by General Formula (1):

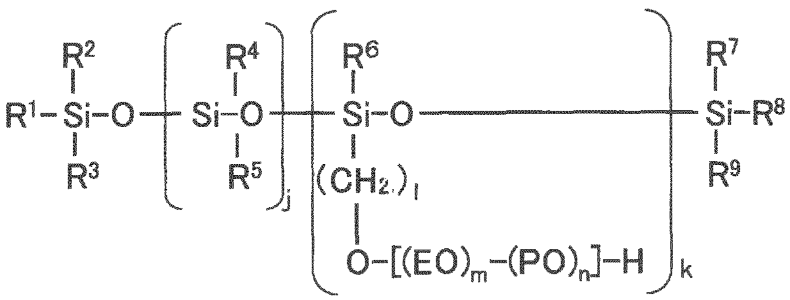

... General Formula (1),

since this compound can function favorably as a surfactant. That is, the polysiloxane compound preferably contains both the compound represented by General Formula (1) and a compound represented by General Formula (2):

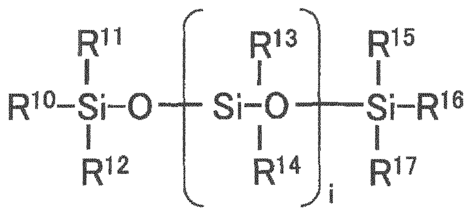

... General Formula (2).

$R^1$ to $R^8$ of General Formula (1) each independently represents an alkyl group, a hydroxyalkyl group, or an aryl group. The alkyl group is preferably a $C_1$-$C_6$ alkyl group, and more preferably a $C_1$-$C_4$ alkyl group. Examples of the alkyl group include methyl group, ethyl group, n-propyl group, iso-propyl group, n-butyl group, iso-butyl group, sec-butyl group, and tert-butyl group, with methyl group being preferable.

The hydroxyalkyl group is preferably a $C_1$-$C_6$ hydroxyalkyl group, and more preferably a $C_1$-$C_4$ hydroxyalkyl group. Examples of the hydroxyalkyl group include hydroxymethyl group, 2-hydroxyethyl group, 2-hydroxypropyl group, and 3-hydroxypropyl group.

The aryl group is preferably a $C_6$-$C_{14}$ aryl group, and more preferably a $C_6$-$C_{10}$ aryl group. Examples of the aryl group include phenyl group, and naphthyl group, with phenyl group being preferable.

j in General Formula (1) represents an integer of 0 or more, preferably an integer of 0 to 2, and more preferably 0 or 1.

k in General Formula (1) represents an integer of 1 or more, and preferably an integer of 1 to 2. l in General Formula (1) represents an integer of 1 or more, and preferably an integer of 1 to 3. EO represents an ethyleneoxy group; and PO represents a propyleneoxy group. The order in which EO and PO are coupled with each other is not limited to the order shown in General Formula (1). The mode of polymerization of EO and PO inside the parentheses of General Formula (1) may be random polymerization or block polymerization. For example, when m = 2 and n = 1, the group inside the parentheses may be -(EO)-(PO)-(EO)-, $-(EO)_2-(PO)-$, or $-(PO)-(EO)_2-$. m and n in General Formula (1) each independently represents an integer of 0 or more, and preferably an integer of 1 to 12. m represents more preferably an integer of 3 to 10, and n represents more preferably an integer of 0 to 10, provided that total value of m and n represents an integer of 1 or more.

Examples of the compound represented by General Formula (1) include a compound where $R^1$ to $R^9$ = $-CH_3$, j = 1, k = 1, l = 3, m = 6 and n = 1, and a compound where $R^1$ to $R^9$ = $-CH_3$, j = 0, k = 1, l = 3, m = 5 and n = 0, in General Formula (1). Examples of commercially products of the compound represented by General Formula (1) include KF-351A, KF-354L, KF-355A and KF-642 manufactured by Shin-Etsu Chemical Co., Ltd., and BYK347 and BYK348 manufactured by BYK Japan KK.

The HLB value defined by the following formula:

$$HLB = 0.89 \times (\text{clouding number A}) + 1.11$$

of the compound represented by General Formula (1) can be set within a range of 6 to 14, and preferably within a range of 8 to 12, from the viewpoint of solubility in the ink. The clouding number A is determined by dissolving 0.5 g of the compound represented by General Formula (1) in 5 ml of ethanol, and by titrating with a 2% aqueous phenol solution while maintaining 25°C. The time when the solution turns turbid is designated as the end point, and the value of ml of a 2% aqueous phenol solution required until the end point is designated as the clouding number A.

$R^{10}$ to $R^{17}$ of General Formula (2) each independently represents a $C_1$-$C_6$ alkyl group, a $C_1$-$C_6$ hydroxyalkyl group, or an aryl group. The alkyl group, hydroxyalkyl group, and aryl group can be defined in the same manner as the above-mentioned alkyl group, hydroxyalkyl group, and aryl group in $R^1$ to $R^8$ of General Formula (1), respectively. i of General Formula (2) represents an integer of 1 or more, and more preferably an integer of 1 to 3.

Examples of the compound represented by General Formula (2) include decamethyltetrasiloxane and octamethyltrisiloxane. Examples of commercially products of the compound represented by General Formula (2) include KF-96 series manufactured by Shin-Etsu Chemical Co., Ltd.

(j + k) which is the length of the main chain of the compound represented by General Formula (1) may be the same as or different from (i) which is the length of the main chain of the compound represented by General Formula (2).

As described above, it is considered that, when the main chain is designed to have a certain length, the compound represented by General Formula (2) has higher hydrophobicity than the compound represented by General Formula (1), and is more likely to be adsorbed to the surface of the coloring material. Thus, it is deduced that the compound represented by General Formula (2) can complementarily cover a portion of the surface of the coloring

material particles not covered with a dispersant, making it possible to suppress the aggregation of the coloring material particles and the crystal growth. On the other hand, the compound represented by General Formula (1) is considered to have an effect in covering a certain extent of the surface of the coloring material particles, which effect is not so large as that of the compound represented by General Formula (2). Further, the compound represented by General Formula (1) has a certain degree of hydrophilicity, and thus also has high solubility in the ink.

Accordingly, it is considered that, by using the compound represented by General Formula (1) and the compound represented by General Formula (2) in combination, it becomes possible to suppress the aggregation of the coloring material particles and the crystal growth to a higher degree, without impairing the solubility in the ink.

The compound represented by General Formula (1) may also function as a surfactant, and therefore can lower the surface tension of the inkjet ink, thus enhancing the wettability to a recording medium.

The total amount of the compound represented by General Formula (1) and the compound represented by General Fonnula (2) is 0.05 mass% or more to 1 mass% or less, and preferably 0.1 mass% or more to 0.9 mass% or less, based on the total mass of the ink. When the total amount of the compounds is at a certain level or higher, it becomes possible to suppress the aggregation of the coloring material particles, and the like. When the total amount of the compounds is at a certain level or lower, there is no concern that the dissolution in the ink may be largely impaired.

The content of the compound represented by General Formula (2) is 5 mass% or more to 40 mass% or less, based on the total amount of the compound represented by General Formula (1) and the compound represented by General Formula (2). When the content of the compound represented by General Formula (2) is at a certain level or higher, it becomes possible to sufficiently cover the surface of the coloring material particles, so that the aggregation of the coloring material particles can be suppressed favorably. On the other hand, when the content of the compound represented by General Formula (2) is at a certain level or lower, neither the dissolution in the ink, nor the effect of lowering the surface tension of the ink is easily impaired.

<Water-Soluble Organic Solvent>

Examples of the water-soluble organic solvent include:

alcohols (such as methanol, ethanol, propanol, isopropanol, butanol, isobutanol, sec-butanol, and t-butanol);
polyhydric alcohols (such as ethylene glycol, diethylene glycol, triethylene glycol, polyethylene glycol, propylene glycol, dipropylene glycol, polypropylene glycol, butylene glycol, hexanediol, pentanediol, glycerol, hexanetriol, and thiodiglycol);
amines (such as ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine);
amides (such as formamide, N,N-dimethylformamide, and N,N-dimethylacetamide);
heterocycles (such as 2-pyrrolidone, N-methyl-2-pyrrolidone, cyclohexyl pyrrolidone, 2-oxazolidone, and 1,3-dimethyl-2-imidazolidinone);
sulfoxides (such as dimethylsulfoxide);
glycol ethers (such as ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, dipropylene glycol monoethyl ether, dipropylene glycol monopropyl ether, and tripropylene glycol monomethyl ether); and
1,2-alkanediols (such as 1,2-butanediol, 1,2-pentanediol, 1,2-hexanediol, and 1,2-heptanediol). These water-soluble organic solvents may be used singly or in combination.

Among those, at least one of the polyalkylene glycols such as diethylene glycol, triethylene glycol, polyethylene glycol, dipropylene glycol and polypropylene glycol, and the glycol ethers is preferably contained in the water-soluble organic solvent. It is considered that the polyalkylene glycols and the glycol ethers can lower the surface tension of the ink to not only enhance the permeability or wettability to a recording medium such as a cloth, but also to improve the continuous discharge stability of the ink.

The content of the water-soluble organic solvent is preferably 10 mass% or more to less than 60 mass%, and more preferably 20 mass% or more to less than 45 mass%, based on the total mass of the ink. By setting the content of the water-soluble organic solvent at a certain level or higher, it becomes possible to increase the moisture-retaining property of the ink, thus suppressing unstable discharge due to ink drying on the nozzle surface of an inkjet head.

In the water-soluble organic solvent, the content of the glycol ethers is 0.5 mass% or more, and preferably 1 mass% or more, based on the total mass of the ink. The content of the glycol ethers can be 10 mass% or less, for example. When the content of the glycol ethers is in the above-mentioned range, the discharge stability becomes more favorable.

<Other Components>

The inkjet ink of the present invention may further contain a surfactant, an antiseptic, and a fungicide, as necessary.

Examples of the surfactant include dialkylsulfosuccinic acid salts, alkylnaphthalenesulfonic acid salts, polyoxyethylene alkyl ethers, polyoxyethylene alkyl allyl ethers, acetylene glycols, polyoxyethylene-polyoxypropylene block copolymers, alkylamine salts, quaternary ammonium salts, and fluorine-based surfactants, or silicone-based surfactants other than the above-mentioned compound represented by General Formula (1) or (2). The content of the surfactant is preferably adjusted such that the surface tension of the ink is from 25 to 60 mN/m; specifically, the content of the surfactant can be set to about 0.001 to 5 mass% based on the total mass of the ink.

Examples of the antiseptic and the fungicide include aromatic halogen compounds (e.g., Preventol CMK), methylene dithiocyanate, halogen-containing nitrogen sulfur compounds, and 1,2-benzisothiazolin-3-one (such as PROXEL GXL).

<Physical Properties of Inkjet Ink>

The viscosity of the inkjet ink of the present invention at 25°C is preferably 1 to 40 mPa·s, more preferably 5 to 40 mPa·s, and even more preferably 5 to 20 mPa·s, from the viewpoint of achieving the discharge stability of the ink. The viscosity of the ink can be measured at 25°C and at 1 rpm using an E-type viscometer.

The surface tension of the ink at 25°C is preferably 25 to 60 mN/m. When the surface tension is less than 25 mN/m, the wettability of the ink to a recording medium such as a cloth is too high, and thus an image is more likely to bleed. On the other hand, when the surface tension is more than 60 mN/m, the wettability of the ink to the recording medium such as a cloth is lowered, and thus the permeability of the ink is more likely to be lowered.

The inkjet ink of the present invention can be manufactured by an arbitrary method, and may be manufactured, for example, through a step of obtaining a dispersion by dispersing a water-insoluble coloring material with a dispersant, and a step of preparing an ink using the dispersion. The compound represented by General Formula (1) and the compound represented by General Formula (2) may be added either in the step of obtaining a dispersion of the water-insoluble coloring material; or in the step of preparing the ink using the dispersion.

2. Inkjet Recording Method

The inkjet recording method of the present invention includes a step of discharging droplets of the inkjet ink of the present invention from a recording head to adhere the droplets onto a recording medium, and a step of fixing to the recording medium the droplets adhered thereonto.

Examples of the recording medium include plain paper, cloth, inkjet paper, inkjet glossy paper, cardboard, wood materials, coated paper such as paper for printing, resin base materials (e.g., hydrophobic resin base materials such as polystyrenes, acrylonitrile-butadiene-styrene copolymers (ABS resins), vinyl chloride, and polyethylene terephthalate (PET)), metal base materials, glass base materials, and cloth. Among those, cloth is preferable.

As the cloth, it is possible to use a cloth composed mainly of cellulose fiber, amide fiber, polyester fiber, polyurethane fiber, acrylic fiber, or the like. Specifically, it is possible to use a cloth composed of a fiber such as cotton, hemp, wool, silk, viscous rayon, cupra rayon, polynosic, vinylon, nylon, acrylic, polyurethane, rayon polyurethane, polyester, or acetate; particularly, a cloth composed mainly of polyester fiber is preferably used. The fiber composing the cloth may be used singly or in combination. The thickness of yarn composing the cloth can be set within a range of 10 to 100 d, for example.

For example, when a cloth is used as a recording medium, the inkjet recording method of the present invention includes the steps of: (1) adding a pretreatment agent to a cloth (pretreatment step); (2) discharging droplets of the inkjet ink of the present invention to the cloth to which the pretreatment agent was added (image formation step); and (3) fixing dye landed on the cloth to a fiber (color development step), and may further include, as necessary, the steps of: removing dye which could not be fixed to the cloth or the pretreatment agent (washing step); and drying the washed cloth (drying step).

<Pretreatment Step>

The pretreatment step is a step for treating a cloth in advance with a pretreatment agent, in order to obtain a sharp image by preventing ink bleeding on the cloth. The pretreatment method is not particularly limited; a method suitable for the material of the cloth and for the ink can be appropriately selected from conventionally known methods. Examples thereof include a method of adding the pretreatment agent to the cloth by padding method, coating method, spray method, or the like. The addition amount (squeezing rate) of the pretreatment agent depends on the type of a

cloth, and the use application thereof, and may be, for example, 0.2 mass% to 90 mass% based on the total mass of the cloth.

The pretreatment agent contains at least one of a water-soluble polymer, a water-soluble metal salt, a polycation compound, a surfactant and a water-repellent, and preferably contains a water-soluble polymer.

The water-soluble polymer can be a natural water-soluble polymer or a synthetic water-soluble polymer. Examples of the natural water-soluble polymer include starches from corn, wheat and the like, cellulose derivatives such as carboxymethyl cellulose, methyl cellulose and hydroxyethyl cellulose; polysaccharides such as sodium alginate, guar gum, tamarind gum, locust bean gum and gum Arabic; and protein substances such as gelatin, casein and keratin. Examples of the synthetic water-soluble polymer include polyvinyl alcohol, polyvinyl pyrrolidone and acrylic acid-based polymer.

Examples of the water-soluble metal salt include organic acid salts or inorganic salts such as alkali metals or alkali earth metals. Examples of the polycation compound include a polymer or an oligomer of various quaternary ammonium salts, and polyamine salts. Some of water-soluble metal salts and polycation compounds may change the color tone of the cloth, or may lower color fastness to light, and thus the selection is preferably made depending on the type of a cloth.

Examples of the surfactant include anionic, cationic, ampholytic, and nonionic surfactants. Examples of the anionic surfactant include higher alcohol sulfuric acid ester salts, and naphthalene derivative sulfonates; examples of the cationic surfactant include quaternary ammonium salts; examples of the ampholytic surfactant include imidazolidine derivatives; and examples of the nonionic surfactant include polyoxyethylene alkyl ethers, polyoxyethylene propylene block polymers, sorbitan fatty acid esters, polyoxyethylene sorbitan fatty acid esters, and acetylene alcohol ethylene oxide adducts.

Examples of the water repellent include silicone-based water repellents, fluorine-based water repellents, and wax-based water repellents.

These water-soluble polymers and surfactants are preferably stable even under a high temperature environment, in order not to cause stain due to tarring when developing colors at high temperature after image formation. Further, the water-soluble polymer and the surfactant are preferably removed from a cloth with a washing treatment following the color development at high temperature after image formation.

The pretreatment agent preferably further contains a pH adjuster. The pH adjuster is preferably an acid, and specific examples thereof include citric acid, malic acid, and tartaric acid. The addition of an acid as the pH adjuster to the pretreatment agent enables a sharp image to be formed at high density.

The pretreatment agent may further contain arbitrary components such as a reduction inhibitor, a chelating agent, an antiseptic, and a softening agent, as necessary. Examples of the reduction inhibitor include sodium m-nitrobenzenesulfonate. Examples of the chelating agent include aminopolycarboxylate, hydroxycarboxylate, polycarboxylate, ethylenediaminetetraacetic acid (EDTA), nitrilotriacetic acid, and diethylenetriaminepentaacetic acid. The antiseptic either may be an antiseptic exemplified as the antiseptic for the ink, or may be the same.

<Image Formation Step>

The image formation step is a step for forming an image prior to color development by discharging droplets of the inkjet ink of the present invention from an inkjet recording head to a cloth. The cloth is moved relative to a head carriage loaded with a plurality of inkjet recording heads, while ink droplets are discharged and are landed on the cloth. It is noted that ink droplets of the respective colors may be discharged either separately or concurrently. From the viewpoint of suppressing the bleeding in the image prior to color development, the cloth may be heated as necessary during image formation.

As described above, the inkjet ink of the present invention contains both the compound represented by General Formula (1) and the compound represented by General Formula (2), and thus a water-insoluble coloring material such as a disperse dye can be dispersed stably. This enables the inkjet ink of the present invention to have high storage stability as well as favorable discharge stability.

<Color Development Step>

The color development step is a step in which a dye in an image not having been fixed sufficiently in a cloth prior to a color development reaction is fixed to the cloth to develop an original color hue of the ink. The method of developing the color hue may be a conventionally known method; examples thereof include steaming method, HT steaming method, HP steaming method, thermofixing method, alkali pad steam method, alkali blotch steam method, alkali shock method, and alkali cold fixing method, and the method is appropriately selected depending on the printing ink and the cloth. For example, when applying high-temperature steam to polyester fiber with an HT steamer, treatment at 160 to 180°C for 5 to 10 minutes is preferable; and when applying high-pressure steam with an HP steamer, treatment

at 130 to 140°C for about 30 minutes is preferable. A cellulose fiber is preferably treated at 95 to 105°C for 5 to 15 minutes; and an amide fiber such as silk or wool is preferably treated at 95 to 105°C for 20 to 40 minutes. It is noted that a cloth on which an image prior to a color development reaction is formed either may be immediately subjected to color development, or may be subjected to the color development after the lapse of time.

<Washing Step>

The washing step is a step for removing the pretreatment agent or dye which could not be fixed to the cloth after the step of color development of the cloth. As the washing method, it is possible to use a conventionally known water-washing method, soaping method, or the like, which is appropriately selected depending on the type of a cloth or inkjet ink. For example, a cloth composed mainly of polyester fiber can be typically washed and treated with a liquid mixture of caustic soda, a surfactant and hydrosulfite.

<Drying Step>

The drying step is a step for drying a washed cloth to be performed after the above-described washing step. The drying method is not particularly limited; drying is performed by squeezing or airing the washed cloth, or alternatively a drying machine (such as heat roll or iron) is used for drying.

<Inkj et Recording Apparatus>

Hereinafter, an apparatus that performs the pretreatment step and the image formation step will be described with reference to the drawings; however, the inkjet recording apparatus used for the inkjet recording method of the present invention is not limited thereto.

FIG. 1 is a partial schematic diagram illustrating an example of a configuration of an inkjet recording apparatus. The inkjet recording apparatus includes conveying means 2 that conveys a cloth, head carriage 5 loaded with a plurality of inkjet recording heads (not illustrated) that discharges an inkjet ink to the cloth, and warm-air-adding means 6 that adds warm air to the cloth.

Conveying means 2 includes viscous belt 21, support roller 22, conveying roller 23, and nip roller 24. Viscous belt 21 is held by support roller 22 and conveying roller 23, and is circulated among support rollers 22 and conveying roller 23. Nip roller 24 is disposed so as to face conveying roller 23 with viscous belt 21 interposed therebetween.

Warm-air-adding means 6 and head carriage 5 are disposed above cloth P. Warm-air-adding means 6 includes therein fan 6A and heating element 6B so as to be able to control temperature. An inkjet recording head to be loaded in head carriage 5 is not particularly limited, and may be either a thermal head or a piezo head. The nozzle diameter of the inkjet recording head is preferably 10 to 100 μm, and more preferably 10 to 50 μm, because nozzle clogging is likely to occur due to insoluble matters when the nozzle diameter is less than 10 μm, and because the sharpness of the formed image is lowered when the nozzle diameter is more than 100 μm, on the other hand. Further, the size of an ink droplet to be discharged is preferably 4 to 150 pl, and more preferably 5 to 80 pl, because the discharged ink droplets are likely to be influenced by an air stream near the head when the size of the ink droplet is less than 4 pl, and because there is conspicuous granular feeling of the formed image when the size of the ink droplet is more than 150 pl, on the other hand.

The inkjet recording apparatus applicable to the present invention may include an ink control section (not illustrated) that controls the discharge of inks of respective colors, according to set conditions for image formation.

When conveying roller 23 is driven, cloth P disposed on the upper surface of viscous belt 21 is conveyed to the lower surface of nip roller 24. Cloth P is pressurized by viscous belt 21 and nip roller 24, and is fixed onto viscous belt 21. Cloth P fixed on viscous belt 21 is conveyed to a location below head carriage 5. A plurality of inkjet recording heads loaded in head carriage 5 discharges ink droplets of the inkjet ink of the present invention, and lands the ink droplets on a certain area (landable area) of the cloth to which a pretreatment agent is added to form an image. Next, temperature-controllable air or warm air is blown from warm-air-adding means 6 to dry the image formed on cloth P.

EXAMPLES

Hereinafter, the present invention will be described specifically by way of Examples; however, the present invention is not construed to be limited by these Examples.

<Ink Material>

(Water-Insoluble Coloring material)

Pigment
I: C.I Pigment Blue 15:3
Disperse Dye

II: DB165 (Disperse Blue 165)
DB60 (Disperse Blue 60)
DR343 (Disperse Red 343)

(Dispersant)

J586: JONCRYL 586 (manufactured by BASF Japan Ltd.; acid value 108 mgKOH/g, weight average molecular weight 4,600, Tg 60°C)
J67: JONCRYL 67 (manufactured by BASF Japan Ltd.; acid value 213 mgKOH/g, weight average molecular weight 12,500, Tg 73°C)
J819: JONCRYL 819 (manufactured by BASF Japan Ltd.; acid value 75 mgKOH/g, weight average molecular weight 14,500, Tg 57°C)
BYK-190: DISPERBYK-190 (manufactured by BYK Japan KK; acid value 10 mgKOH/g)
F-68: Pluronic F-68 (manufactured by Adeka Corporation; polyoxyethylene-polyoxypropylene glycol (160/30) copolymer, acid value 0 mgKOH/g)

The acid value and the weight average molecular weight of the dispersant were measured respectively according to the following methods.

(Acid Value)

The acid value was measured according to the following method, in accordance with JIS K0070.
10 g of resin was weighed into a 300 mL Erlenmeyer flask, and about 50 ml of a mixed solvent of ethanol:benzene = 1:2 was added thereto to dissolve the resin. Next, the solution was titrated with a 0.1 mol/L potassium hydroxide ethanol solution having been standardized in advance, using a phenolphthalein indicator. Then, the acid value (mgKOH/g) was determined from the amount of the potassium hydroxide ethanol solution used for titration, according to the following Calculation Formula (1).

Calculation Formula (1)

$$A = (B \times f \times 5.611) / S$$

where A is an acid value (mgKOH/g) of the resin, B is an amount (ml) of the 0.1 mol/L potassium hydroxide ethanol solution used for the titration, f is a factor of the 0.1 mol/L potassium hydroxide ethanol solution, S is a mass (g) of the resin, and 5.611 is a 1/10 value of the formula weight of potassium hydroxide (56.11/10).

(Weight Average Molecular Weight)

The weight average molecular weight was measured using gel permeation chromatography. The measurement conditions were as follows:

(Measurement Conditions)

| | |
|---|---|
| Solvent | : Tetrahydrofuran |
| Column | : TSK gel G4000 + 2500 + 2000 HXL manufactured by Tosoh Corporation |

(continued)

| | |
|---|---|
| Column temperature | : 40°C |
| Injection amount | : 100 μl |
| Detector | : RI Model 504 (manufactured by GL Sciences Inc.) |
| Pump | : L6000 (manufactured by Hitachi, Ltd.) |
| Flow rate | : 1.0 ml/min |
| Calibration curve | : Calibration curve by 13 samples of standard polystyrene STK (manufactured by Tosoh Corporation) having Mw = 1,000,000 to 500 was used. 13 samples were used in an approximately equal interval. |

(Compound Represented by General Formula (1))

Compound A: a compound in which $R^1$ to $R^9$ = $-CH_3$, j = 1, k = 1, l = 3, m = 6, and n = 1 in General Formula (1)
Compound B: a compound in which $R^1$ to $R^9$ = $-CH_3$, j = 0, k = 1, l = 3, m = 5, and n = 0 in General Formula (1)
(Compound Represented by General Formula (2))
Compound a: a compound in which $R^{10}$ to $R^{17}$ = $-CH_3$ and i = 2 in General Formula (2)
Compound b: a compound in which $R^{10}$ to $R^{17}$ = $-CH_3$ and i = 1 in General Formula (2)

(Water-Soluble Organic Solvent)

EG: Ethylene glycol

PEG#600: Polyethylene glycol

DPG: Dipropylene glycol

Gly: Glycerol

2PDN: 2-Pyrrolidone

DPGME: Dipropylene glycol monomethyl ether

DPGPE: Dipropylene glycol monopropyl ether

(Water)

Ion-exchanged water

<Preparation of Ink>

(Preparation of Dispersion Liquid 1)

To 78.5 parts by mass of ion-exchanged water were added 20 parts by mass of JONCRYL 586 (manufactured by BASF Japan Ltd.; acid value 108 mgKOH/g) and 1.5 parts by mass of sodium hydroxide, and the mixture was stirred while being heated to 60°C to obtain 20 mass% of an aqueous dispersant solution of a sodium-neutralized product of JONCRYL 586. 30 parts by mass of the aqueous dispersant solution was added to 35 parts by mass of the ion-exchanged water, and 10 parts by mass of ethylene glycol and 5 parts by mass of glycerol were further added, followed by mixing. To the resultant solution was added 20 parts by mass of C.I Pigment Blue 15:3, followed by premixing, and subsequently the mixture was dispersed with a sand grinder loaded with 50 vol% of 0.5 mm zirconia beads to prepare dispersion liquid 1 having a pigment solid content of 20 mass%.

(Preparation of Dispersion Liquid 2)

In the same manner as described above, 20 mass% of an aqueous dispersant solution of a sodium-neutralized product of JONCRYL 586 was prepared, and in the same manner as the dispersion liquid 1 except that the water-insoluble coloring material was changed to Disperse Blue 165, dispersion liquid 2 having a dye solid content of 20% was further prepared.

(Preparation of Dispersion Liquid 3)

20 mass% of an aqueous dispersant solution of a sodium-neutralized product of JONCRYL 586 was prepared, and in the same manner as the dispersion liquid 1 except that the water-insoluble coloring material was changed to Disperse Red 177, dispersion liquid 3 having a dye solid content of 20% was further prepared.

(Example 1)

Preparation of Ink 1

Addition was made such that the dispersion liquid 1 prepared as described above was contained in 30 parts by mass (6 parts by mass of pigment solid content), the compound A as a compound represented by General Formula (1) was contained in 0.8 parts by mass, the compound a as a compound represented by General Formula (2) was contained in 0.6 parts by mass, PROXEL GXL (manufactured by Zeneca, Inc.) as a fungicide was contained in 0.2 parts by mass, and each of ethylene glycol and glycerol as water-soluble organic solvents was contained in 10 parts by mass together with a portion in the dispersion liquid 1; and ion-exchanged water was further added such that the total mass of the mixture reached 100 parts by mass, followed by stirring. The resultant solution was filtered with a 1 μm filter to obtain ink 1.

(Examples 2 to 16, and Comparative Examples 1 and 2)

Preparation of Inks 2 to 18

In the same manner as Example 1, except that at least one of the type of water-insoluble coloring material (type of dispersion liquid), the type and the addition amount of the compounds represented by General Formulas (1) and (2), and the type and the addition amount of the water-soluble organic solvents was changed as shown in Table 1, inks 2 to 18 were prepared. It is noted that, in each of Examples and Comparative Examples, 0.2 parts by mass of PROXEL GXL as a fungicide was added to all the inks, although not shown in Table 1.

The compositions of prepared inks are shown in Table 1. Examples 11 to 16 are according to the invention and examples 1 to 10 are reference examples.

Table 1

| | Ink No. | Coloring Material | Polysiloxane Compound | | | | | | Dispersant | | Water-Soluble Organic Solvent | | | | | |
|---|---|---|---|---|---|---|---|---|---|---|---|---|---|---|---|---|
| | | | General Formula (1) | | General Formula (2) | | (1)+(2) | {(2)/(1)+(2)}*100 | Type | Acid Value (mgKOH/g) | Solvent 1 | | Solvent 2 | | Solvent 3 | |
| | | | Type | Addition Amount (mass%) | Type | Addition Amount (mass%) | | | | | Type | Addition Amount (mass%) | Type | Addition Amount (mass%) | Type | Addition Amount (mass%) |
| Ex. 1 | 1 | I | A | 0.8 | a | 0.6 | 1.4 | 42.9 | J586 | 108 | EG | 10 | Gly | 10 | - | - |
| Ex. 2 | 2 | DB165 | A | 0.8 | a | 0.6 | 1.4 | 42.9 | | | EG | 10 | Gly | 10 | - | - |
| Ex. 3 | 3 | I | A | 0.02 | a | 0.02 | 0.04 | 50 | | | EG | 35 | Gly | 10 | - | - |
| Ex. 4 | 4 | DB165 | A | 0.02 | a | 0.02 | 0.04 | 50 | | | EG | 35 | Gly | 10 | - | - |
| Ex. 5 | 5 | DB165 | A | 0.02 | b | 0.02 | 0.04 | 50 | | | EG | 35 | Gly | 10 | - | - |
| Ex. 6 | 6 | DB165 | B | 0.7 | b | 0.4 | 1.1 | 36.4 | | | EG | 20 | Gly | 5 | DPG | 5 |
| Ex. 7 | 7 | DB165 | B | 0.01 | b | 0.03 | 0.04 | 75 | | | EG | 35 | Gly | 10 | - | - |
| Ex. 8 | 8 | DB165 | B | 0.01 | a | 0.03 | 0.04 | 75 | | | EG | 35 | Gly | 10 | - | - |
| Ex. 9 | 9 | DB165 | A | 0.5 | a | 0.5 | 1 | 50 | | | EG | 35 | Gly | 10 | - | - |
| Ex. 10 | 10 | DB165 | B | 0.02 | b | 0.04 | 0.06 | 66.7 | | | EG | 35 | Gly | 10 | - | - |
| Ex. 11 | 11 | DB165 | A | 0.6 | a | 0.4 | 1 | 40 | | | EG | 35 | Gly | 10 | - | - |
| Ex. 12 | 12 | DB165 | A | 0.14 | a | 0.06 | 0.2 | 30 | | | EG | 35 | Gly | 10 | - | - |
| Ex. 13 | 13 | DB165 | B | 0.8 | b | 0.05 | 0.85 | 5.9 | | | EG | 20 | Gly | 5 | 2PDN | 5 |
| Ex. 14 | 14 | DB165 | B | 0.5 | b | 0.2 | 0.7 | 28.6 | | | EG | 35 | Gly | 10 | - | - |
| Ex. 15 | 15 | DB165 | B | 0.8 | b | 0.05 | 0.85 | 5.9 | | | EG | 25 | Gly | 10 | PEG | 4 |
| Ex. 16 | 16 | DB177 | B | 0.8 | b | 0.05 | 0.85 | 5.9 | | | EG | 35 | Gly | 10 | - | - |
| Comp. Ex. 1 | 17 | DB165 | A | 1.2 | - | - | 1.2 | - | | | EG | 10 | Gly | 10 | - | - |
| Comp. Ex. 2 | 18 | DB165 | - | - | a | 0.6 | 0.6 | - | | | EG | 10 | Gly | 10 | - | - |

The storage stability and the discharge stability of the obtained inks were evaluated according to the following methods.

(Storage Stability)

The produced inks were each stored at 40°C for four weeks. Thereafter, the inks were diluted 60,000 times with ion-exchanged water, and were dropped onto a PET film, followed by drying. Subsequently, ink droplets after drying were observed using an electron microscope (SEM). Inks before heat storage were also subjected to a similar observation, and were compared with inks after the heat storage. Then, the storage stability of the inks was evaluated according to the following criteria:

B: There is no change at all in coloring material particles
C: There is a slight change in coloring material particles
D: There is a change in coloring material particles

(Discharge Stability)

A printer (manufactured by Konica Minolta, Inc., Nassenger VII) loaded with a head having 512 nozzles with a nozzle diameter of 22 μm, a minimum droplet amount of 14 pl, and a nozzle density of 180 dpi (note that dpi represents the number of dots per 2.54 cm) was used to evaluate the discharge stability in terms of satellite and open time, from printed images.

1) Satellite

Using the above-mentioned inkjet printer, an A-4 sized solid image was printed on polyester fabric, and an end portion of the image was observed visually and in a magnified manner to evaluate satellites. The satellite means a micro droplet (splash) that flies behind a main droplet after the fragmentation of droplets during the discharge of the ink. This droplet may sometimes cause a boundary portion of the image to be stained.

A: No stain due to satellites is observed at an end portion of the image
B: A slight stain due to satellites is observed at an end portion of the image, but is hardly noticeable
C: A few stains due to satellites are observed at an end portion of the image
D: Stains due to satellites are observed at an end portion of the image, which stains cause the image to lack sharpness

2) Open Time

After discharge was performed continuously for 1 minute from all nozzles using the above-mentioned inkjet printer, the discharge from all the nozzles was stopped at once, and continuous ejection from all the nozzles was performed again after the elapse of a predetermined time. This operation was performed under the environment of 25°C and 40%RH, and was repeated while increasing the stopping time by an increment of 15 minutes. Thus, the longest stopping time during which ejection was stably performed without any defective nozzles was set as an open time. Then, open time adequacy was evaluated according to the following criteria.

A: The open time is 24 hours or longer
B: The open time is 3 hours or longer to shorter than 24 hours
C: The open time is 15 minutes or longer to shorter than 3 hours
D: The open time is shorter than 15 minutes

The evaluation results of inks are shown in Table 2.

Table 2

| | Ink No. | Evaluation | | |
|---|---|---|---|---|
| | | Observation of Coloring Material | Discharge Stability | |
| | | | Satellite | Open Time |
| Ex. 1 | 1 | B | B | C |

(continued)

| | Ink No. | Evaluation | | |
|---|---|---|---|---|
| | | Observation of Coloring Material | Discharge Stability | |
| | | | Satellite | Open Time |
| Ex. 2 | 2 | B | B | C |
| Ex. 3 | 3 | B | B | B |
| Ex. 4 | 4 | B | B | B |
| Ex. 5 | 5 | C | B | B |
| Ex. 6 | 6 | B | B | B |
| Ex. 7 | 7 | B | C | B |
| Ex. 8 | 8 | B | C | B |
| Ex. 9 | 9 | B | B | A |
| Ex. 10 | 10 | B | B | A |
| Ex. 11 | 11 | B | A | A |
| Ex. 12 | 12 | B | A | A |
| Ex. 13 | 13 | B | A | A |
| Ex. 14 | 14 | B | A | A |
| Ex. 15 | 15 | B | A | A |
| Ex. 16 | 16 | B | A | A |
| Comp. Ex. 1 | 17 | D | C | C |
| Comp. Ex. 2 | 18 | D | D | D |

It can be found that the inks of Examples 1 to 16 containing both the compound represented by General Formula (1) and the compound represented by General Formula (2) have favorable storage stability and discharge stability compared to the inks of Comparative Examples 1 and 2 containing only one of the compound represented by General Formula (1) and the compound represented by General Formula (2).

In particular, it can be found that the inks of Examples 9 to 16 in which the total amount of the compound represented by General Formula (1) and the compound represented by General Formula (2) is adjusted in a predetermined range have favorable open time compared with the inks of Examples 1 to 8. Further, it can be found that the inks of Examples 11 to 16 in which the percentage of the compound represented by General Formula (2) is adjusted in a predetermined range not only have favorable open time but also have favorable satellite, and thus have high discharge stability.

(Example 17)

Preparation of Dispersion Liquid 4

In the same manner as the preparation method of the dispersion liquid 1, to 77 parts by mass of ion-exchanged water were added 20 parts by mass of JONCRYL 67 (manufactured by BASF Japan Ltd.; acid value 213 mgKOH/g) as a dispersant and 3.0 parts by mass of sodium hydroxide, and the mixture was stirred while being heated to 60°C to obtain 20 mass% of an aqueous dispersant solution of a sodium-neutralized product of JONCRYL 67. 30 parts by mass of the aqueous dispersant solution was added to 35 parts by mass of the ion-exchanged water, and 10 parts by mass of ethylene glycol and 5 parts by mass of glycerol were further added, followed by mixing. To this solution was added 20 parts by mass of Disperse Blue 60, followed by premixing, and subsequently the mixture was dispersed with a sand grinder loaded with 50 vol% of 0.5 mm zirconia beads to prepare dispersion liquid 4 having a dye solid content of 20%.

Preparation of Ink 19

Using the resultant dispersion liquid 4, in the same manner as the preparation method of the ink 1 of Example 1, addition was made such that the content of the water-insoluble coloring material in the ink was 6 parts by mass (solid content), the content of the compound A as the compound represented by General Formula (1) was 0.14 parts by mass, the content of the compound a as the compound represented by General Formula (2) was 0.06 parts by mass, the content of PROXEL GXL (manufactured by Zeneca, Inc.) as a fungicide was 0.2 parts by mass, and the contents of ethylene glycol and glycerol as water-soluble organic solvents were, respectively, 30 parts by mass and 10 parts by mass together with portions contained in the dispersion liquid 4; and ion-exchanged water was further added such that the total mass of the mixture reached 100 parts by mass, followed by stirring. The resultant solution was filtered with a 1 μm filter to obtain ink 19.

(Example 18)

Preparation of Dispersion Liquid 5

6 parts by mass of Pluronic F-68 (manufactured by Adeka Corporation; acid value 0 mgKOH/g) as a dispersant was added to 59 parts by mass of ion-exchanged water, and 10 parts by mass of ethylene glycol and 5 parts by mass of glycerol were further added, followed by mixing. To this solution was added 20 parts by mass of Disperse Blue 60, followed by premixing, and subsequently the mixture was dispersed with a sand grinder loaded with 50 vol% of 0.5 mm zirconia beads to obtain dispersion liquid 5 having a dye solid content of 20%.

Preparation of Ink 20

The resultant dispersion liquid 5 was used to prepare ink 20 in the same manner as Example 17.

(Example 19)

Preparation of Ink 21

The above-described dispersion liquid 4 was used to prepare ink 21 in the same manner as Example 17 except that the ink 21 has an ink composition shown in Table 3.

(Example 20)

Preparation of Dispersion Liquid 6

In the same manner as the preparation method of the dispersion liquid 4 except that the water-insoluble coloring material was changed to Disperse Red 343, dispersion liquid 6 having a dye solid content of 20% was prepared.

Preparation of Ink 22

In the same manner as Example 17 except that the resultant dispersion liquid 6 was used, ink 22 was prepared.

(Example 21)

Preparation of Dispersion Liquid 7

15 parts by mass of DISPERBYK-190 (manufactured by BYK Japan KK; acid value 10 mgKOH/g, solid content 40 mass%) as a dispersant was added to 50 parts by mass of ion-exchanged water, and 10 parts by mass of ethylene glycol and 5 parts by mass of glycerol were further added, followed by mixing. To this solution was added 20 parts by mass of Disperse Blue 60, followed by premixing, and subsequently the mixture was dispersed with a sand grinder loaded with 50 vol% of 0.5 mm zirconia beads to obtain dispersion liquid 7 having a dye solid content of 20%.

Preparation of Ink 23

The resultant dispersion liquid 7 was used to prepare ink 23 in the same manner as Example 17 except that the ink 23 has an ink composition shown in Table 3.

(Example 22)

Preparation of Dispersion Liquid 8

In the same manner as the preparation method of the dispersion liquid 1, to 79 parts by mass of ion-exchanged water were added 20 parts by mass of JONCRYL 819 (manufactured by BASF Japan Ltd.; acid value 75 mgKOH/g) as a dispersant, and 1.0 part by mass of sodium hydroxide, and the mixture was stirred while being heated to 60°C to obtain 20 mass% of an aqueous dispersant solution of a sodium-neutralized product of JONCRYL 819. 30 parts by mass of the aqueous dispersant solution was added to 35 parts by mass of the ion-exchanged water, and to this mixture were further added 10 parts by mass of ethylene glycol and 5 parts by mass of glycerol, followed by mixing. To this solution was added 20 parts by mass of Disperse Red 343, followed by premixing, and subsequently the mixture was dispersed with a sand grinder loaded with 50 vol% of 0.5 mm zirconia beads to prepare dispersion liquid 8 having a dye solid content of 20%.

Preparation of Ink 24

The resultant dispersion liquid 8 was used to prepare ink 24 in the same manner as Example 17 except that the ink 24 has an ink composition shown in Table 3.

(Example 23)

Preparation of Dispersion Liquid 9

In the same manner as the dispersion liquid 1 except that the water-insoluble coloring material was changed to Disperse Red 343, dispersion liquid 9 having a dye solid content of 20% was prepared.

Preparation of Ink 25

The resultant dispersion liquid 9 was used to prepare ink 25 in the same manner as Example 17 except that the ink 25 has an ink composition shown in Table 3.

(Comparative Example 3)

Preparation of Dispersion Liquid 10

In the same manner as the dispersion liquid 1 except that the water-insoluble coloring material was changed to Disperse Blue 60, dispersion liquid 10 having a dye solid content of 20% was prepared.

Preparation of Ink 26

The resultant dispersion liquid 10 was used to prepare ink 26 in the same manner as Example 17 except that the ink 26 has an ink composition shown in Table 3.

(Comparative Example 4)

Preparation of Ink 27

The above-described dispersion liquid 9 was used to prepare ink 27 in the same manner as Example 17 except that the ink 27 has an ink composition shown in Table 3.

The compositions of the prepared inks are shown in Table 3.

Table 3

| | Ink No. | Coloring Material | Polysiloxane Compound | | | | | | Dis persant | | Water-Soluble Organic Solvent | | | | | |
|---|---|---|---|---|---|---|---|---|---|---|---|---|---|---|---|---|
| | | | General Formula (1) | | General Formula (2) | | (1)+(2) | {(2)/(1)+(2)}*100 | Type | Acid Value (mgKOH/g) | Solvent 1 | | Solvent 2 | | Solvent 3 | |
| | | | Type | Addition Amount (mass%) | Type | Addition Amount (mass%) | | | | | Type | Addition Amount (mass%) | Type | Addition Amount (mass%) | Type | Addition Amount (mass%) |
| Ex. 17 | 19 | DB60 | A | 0.14 | a | 0.06 | 0.2 | 30.0 | J67 | 213 | EG | 30 | Gly | 10 | - | - |
| Ex. 18 | 20 | DB60 | A | 0.14 | a | 0.06 | 0.2 | 30.0 | F68 | 0 | EG | 15 | Gly | 5 | DPG | 10 |
| Ex. 19 | 21 | DB60 | A | 0.14 | a | 0.06 | 0.2 | 30.0 | J67 | 213 | EG | 20 | Gly | 10 | DPGME | 5 |
| Ex. 20 | 22 | DR343 | A | 0.14 | a | 0.06 | 0.2 | 30.0 | J67 | 213 | EG | 30 | Gly | 10 | DPGPE | 2 |
| Ex. 21 | 23 | DB60 | A | 0.14 | a | 0.06 | 0.2 | 30.0 | BYK-190 | 10 | EG | 30 | Gly | 10 | DPGPE | 2 |
| Ex. 22 | 24 | DR343 | A | 0.14 | a | 0.06 | 0.2 | 30.0 | J819 | 75 | EG | 30 | Gly | 10 | DPGPE | 2 |
| Ex. 23 | 25 | DR343 | A | 0.14 | a | 0.06 | 0.2 | 30.0 | J586 | 108 | EG | 30 | Gly | 10 | DPGPE | 2 |
| Comp. Ex. 3 | 26 | DB60 | A | 0.14 | - | - | 0.14 | - | J586 | 108 | EG | 30 | Gly | 10 | DPGPE | 2 |
| Comp. Ex. 4 | 27 | DR343 | - | - | a | 0.06 | 0.06 | - | J586 | 108 | EG | 30 | Gly | 10 | DPGPE | 2 |

The continuous dischargeability and the image density of the resultant inks were evaluated according to the following methods.

(Continuous Dischargeability)

<Pretreatment Step>

A polyester cloth was first provided, and the following pretreatment agent was applied thereto such that the squeezing rate (or adhesion amount) was set at 80 mass%, followed by drying at 60°C. A pretreatment agent containing 2.5 mass% of sodium alginate (manufactured by KIMICA Corporation, Kimitex LL), 0.2 mass% of citric acid, 0.5 mass% of sodium m-nitrobenzenesulfonate, and 96.8 mass% of ion-exchanged water was used as the pretreatment agent.

<Image Formation Step>

In the same manner as described above, Nassenger VII (manufactured by Konica Minolta, Inc.) was used as an inkjet printer to print A-4 sized solid images on the pretreated polyester cloth continuously for one hour. After the printing was finished, a nozzle check pattern was printed, and the number of defective nozzles was confirmed to make an evaluation according to the following criteria:

A: No defective nozzle
B: 1 defective nozzle
C: 2 to 5 defective nozzles
D: 6 or more defective nozzles

(Evaluation of Color Unevenness)

Each solid image obtained at the evaluation of the continuous dischargeability was subjected to steaming at 175°C for 7 minutes using HT steamer Model HT-3 (Tsujii Dyeing Machine Manufacturing Co., Ltd.) (color development step); and subsequently to washing including reduction cleaning at 80°C (washing step), followed by drying. The resultant solid images were visually observed to evaluate color unevenness based on the following criteria:

A: Sharp image in a deep color tone
B: Image in a deep color tone while slightly lacking sharpness
C: Image slightly lacking sharpness and a deep color tone
D: Generally whity image with no sharpness and no deep color tone

The evaluation results of inks are shown in Table 4.

Table 4

| | Ink No. | Evaluation | |
|---|---|---|---|
| | | Continuous Dischargeability | Color Unevenness |
| Ex. 17 | 19 | C | B |
| Ex. 18 | 20 | C | B |
| Ex. 19 | 21 | B | B |
| Ex. 20 | 22 | B | B |
| Ex. 21 | 23 | B | A |
| Ex. 22 | 24 | B | A |
| Ex. 23 | 25 | B | A |
| Comp. Ex. 3 | 26 | D | C |
| Comp. Ex. 4 | 27 | D | C |

It can be found that the inks of Examples 17 to 23 containing both the compound represented by General

Formula (1) and the compound represented by General Formula (2) have favorable continuous dischargeability and allow the color unevenness of an image to be suppressed, compared to the inks of Comparative Examples 3 and 4 containing only one of the compound represented by General Formula (1) and the compound represented by General Formula (2).

Further, it can be found that the inks of Examples 19 to 23 containing glycol ethers have higher continuous dischrgeability than the inks of Examples 17 and 18 not containing glycol ethers. Furthermore, it can be found that the inks of Examples 21 to 23 containing a dispersant having an acid value within a predetermined range allow the color unevenness of an image to be more suppressed, than the inks of Examples 17 to 20 containing a dispersant whose acid value is not adjusted.

This application is entitled to and claims the benefit of Japanese Patent Application No. 2014-015502, filed on January 30, 2014.

Industrial Applicability

According to the present invention, it is possible to provide an inkjet ink having high disperse stability and various favorable performances such as discharge stability, even when containing a water-insoluble coloring material.

Reference Signs List

P Cloth
2 Conveying means
5 Head carriage
6 Warm-air-adding means
6A Fan
6B Heating element
21 Viscous belt
22 Support roller
23 Conveying roller
24 Nip roller

**Claims**

1. An inkjet ink containing at least a disperse dye, a dispersant, a polysiloxane compound, a water-soluble organic solvent, and water,
wherein the polysiloxane compound comprises both a compound represented by General Formula (1) and a compound represented by General Formula (2):

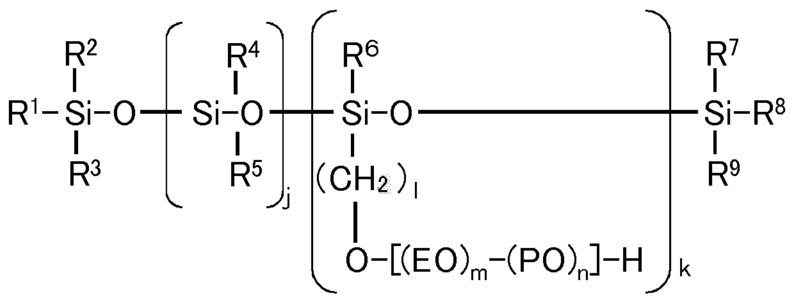

... General Formula (1)

wherein:

$R^1$ to $R^9$ each independently represents a $C_1$-$C_6$ alkyl group, a $C_1$-$C_6$ hydroxyalkyl group, or an aryl group;
j represents an integer of 0 or more;
k and l each independently represents an integer of 1 or more;
EO represents an ethyleneoxy group, PO represents a propyleneoxy group, and arrangement of the EO and the PO inside brackets are in an arbitrary order, thereby forming a random or block structure; and

m and n each independently represents an integer of 0 or more, wherein total value of m and n is an integer of 1 or more, and

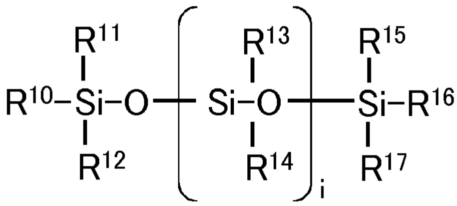

... General Formula (2)

wherein:

$R^{10}$ to $R^{17}$ each independently represents a $C_1$-$C_6$ alkyl group, a $C_1$-$C_6$ hydroxyalkyl group, or an aryl group; i represents an integer of 1 or more, and
wherein the content of the compound represented by General Formula (2) is 5 mass% or more to 40 mass% or less, based on the total mass of the compound represented by General Formula (1) and the compound represented by General Formula (2), and
the total amount of the compound represented by General Formula (1) and the compound represented by General Formula (2) is 0.05 mass% or more to 1 mass% or less, based on a total mass of the inkjet ink.

2. The inkjet ink according to claim 1, wherein total value of j and k of the General Formula (1) is different from the value of i in the General Formula (2).

3. The inkjet ink according to claim 1 or 2, wherein the water-soluble organic solvent contains at least one of polyalkylene glycols and glycol ethers.

4. The inkjet ink according to any one of claims 1 to 3, wherein the dispersant is an acrylic resin having an acid value of 10 mgKOH/g or more to 150 mgKOH/g or less.

5. The inkjet ink according to any one of claims 1 to 4, wherein the inkjet ink contains as the disperse dye at least one member selected from the group consisting of C.I. Disperse Blue 60, C.I. Disperse Red 343, and Disperse Red 177.

6. An inkjet recording method which comprises discharging droplets of the inkjet ink according to any one of claims 1 to 5 from an inkjet recording head onto a cloth.

7. The inkjet recording method according to claim 6, wherein the cloth is a polyester cloth subjected to an acidic pretreatment.

**Patentansprüche**

1. Tintenstrahltinte, welche zumindest einen Dispersionsfarbstoff, ein Dispergiermittel, eine Polysiloxanverbindung , ein wasserlösliches organisches Lösemittel und Wasser aufweist,
wobei die Polysiloxanverbindung sowohl eine durch die allgemeine Formel (1) dargestellte Verbindung als auch eine durch die allgemeine Formel (2) dargestellte Verbindung aufweist:

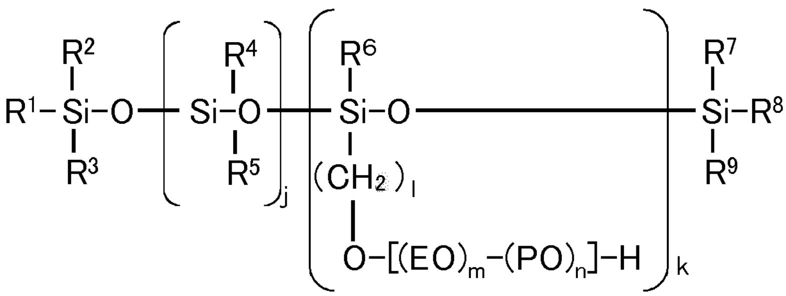

... General Formula (1)

wobei:

$R^1$ bis $R^9$ jeweils unabhängig voneinander eine $C_1$-$C_6$-Alkylgruppe, eine $C_1$-$C_6$-Hydroxyalkylgruppe oder eine Arylgruppe darstellen;
j eine ganze Zahl von 0 oder mehr darstellt;
k und l jeweils unabhängig voneinander eine ganze Zahl von 1 oder mehr darstellen;
EO eine Ethylenoxygruppe darstellt, PO eine Propylenoxygruppe darstellt und die Anordnung der EO-Gruppe und der PO-Gruppe innerhalb der Klammern in einer beliebigen Reihenfolge erfolgt, wodurch eine zufällige oder blockartige Struktur gebildet wird; und
m und n jeweils unabhängig voneinander eine ganze Zahl von 0 oder mehr darstellen, wobei der Gesamtwert von m und n einer ganzen Zahl von 1 oder mehr entspricht, und

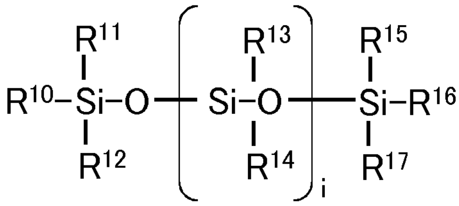

… General Formula (2)

wobei:

$R^{10}$ bis $R^{17}$ jeweils unabhängig voneinander eine $C_1$-$C_6$-Alkylgruppe, eine $C_1$-$C_6$-Hydroxyalkylgruppe oder eine Arylgruppe darstellen;
i eine ganze Zahl von 1 oder mehr darstellt, und
wobei der Gehalt der durch die allgemeine Formel (2) dargestellten Verbindung 5 Massen-% oder mehr bis 40 Massen-% oder weniger beträgt, basierend auf der Gesamtmasse der durch die allgemeine Formel (1) dargestellten Verbindung und der durch die allgemeine Formel (2) dargestellten Verbindung , und
die Gesamtmenge der durch die allgemeine Formel (1) dargestellten Verbindung und der durch die allgemeine Formel (2) dargestellten Verbindung 0,05 Massen-% oder mehr bis 1 Massen-% oder weniger beträgt, basierend auf einer Gesamtmasse der Tintenstrahltinte.

**2.** Tintenstrahltinte gemäß Anspruch 1, wobei der Gesamtwert von j und k in der allgemeinen Formel (1) verschieden ist von dem Wert von i in der allgemeinen Formel (2).

**3.** Tintenstrahltinte gemäß Anspruch 1 oder 2, wobei das wasserlösliche organische Lösemittel zumindest einen Stoff aus Polyalkylenglykolen und Glycolethern enthält.

**4.** Tintenstrahltinte gemäß irgendeinem der Ansprüche 1 bis 3, wobei das Dispergiermittel ein Acrylharz mit einem Säurewert von 10 mg KOH/g oder mehr bis 150 mg KOH/g oder weniger ist.

**5.** Tintenstrahltinte gemäß irgendeinem der Ansprüche 1 bis 4, wobei die Tintenstrahltinte als Dispersionsfarbstoff zumindest ein Element enthält, das ausgewählt ist aus der Gruppe, die aus C.I. Disperse Blue 60, C.I. Disperse Red 343 und Disperse Red 177 besteht.

**6.** Tintenstrahlaufzeichnungsverfahren, welches den Austrag von Tropfen der Tintenstrahltinte gemäß irgendeinem der Ansprüche 1 bis 5 aus einem Tintenstrahlaufzeichnungskopf auf ein Tuch umfasst.

**7.** Tintenstrahlaufzeichnungsverfahren gemäß Anspruch 6, wobei das Tuch aus einem einer Säure-Vorbehandlung unterzogenen Polyestertuch besteht.

## Revendications

**1.** Encre pour jet d'encre contenant au moins un colorant dispersé, un agent de dispersion, un composé polysiloxane, un solvant organique soluble dans l'eau et de l'eau,
dans lequel le composé polysiloxane comprend un composé représenté par la formule générale (1) et un composé

représenté par la formule générale (2) :

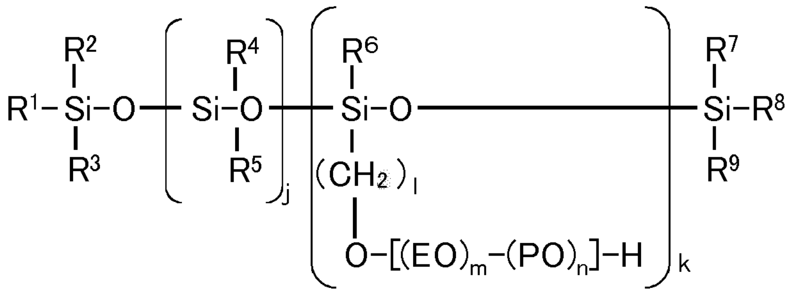

... Formule générale (1)

dans lequel :

$R^1$ à $R^9$ représentent chacun de manière indépendante un groupe alkyle $C_1$-$C_6$, un groupe hydroxyalkyle $C_1$-$C_6$ ou un groupe aryle ;
j représente un nombre entier valant 0 ou plus ;
k et l représentent chacun de manière indépendante un nombre entier valant 1 ou plus ;
EO représente un groupe éthylèneoxy, PO représente un groupe propylèneoxy et la disposition de EO et de PO à l'intérieur des parenthèses est dans un ordre arbitraire, formant ainsi une structure aléatoire ou de bloc ; et
m et n représentent chacun de manière indépendante un nombre entier valant 0 ou plus, dans lequel la valeur totale de m et de n est égale à un nombre entier valant 1 ou plus, et

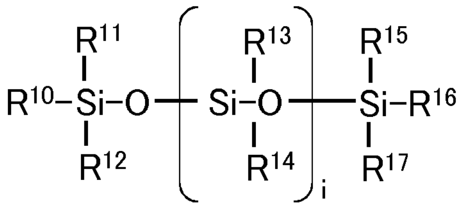

... Formule générale (2)

dans lequel :

$R^{10}$ à $R^{17}$ représentent chacun de manière indépendante un groupe alkyle $C_1$-$C_6$, un groupe hydroxyalkyle $C_1$-$C_6$ ou un groupe aryle ;
i représente un nombre entier valant 1 ou plus ; et
dans lequel la teneur en le composé représenté par la formule générale (2) est 5 % en masse ou plus à 40 % en masse ou moins, basé sur la masse totale du composé représenté par la formule générale (1) et du composé représenté par la formule générale (2), et
la quantité totale du composé représenté par la formule générale (1) et du composé représenté par la formule générale (2) est 0,05 % en masse ou plus à 1 % en masse ou moins, basé sur une masse totale de l'encre pour jet d'encre.

**2.** Encre pour jet d'encre selon la revendication 1, dans lequel la valeur totale de j et de k de la formule générale (1) est différente de la valeur de i dans la formule générale (2).

**3.** Encre pour jet d'encre selon la revendication 1 ou la revendication 2, dans lequel le solvant organique soluble dans l'eau contient au moins une substance parmi des polyalkylènes-glycols et des éthers de glycol.

**4.** Encre pour jet d'encre selon l'une quelconque des revendications 1 à 3, dans lequel l'agent de dispersion est une résine acrylique ayant une valeur acide de 10 mg KOH/g ou plus à 150 mg KOH/g ou moins.

**5.** Encre pour jet d'encre selon l'une quelconque des revendications 1 à 4, dans lequel l'encre pour jet d'encre contient comme colorant dispersé au moins un élément sélectionné dans le groupe composé de C.I. Disperse Blue 60, de C.I. Disperse Red 343 et de Disperse Red 177.

**6.** Procédé d'enregistrement à jet d'encre, qui comprend l'étape de décharger des gouttelettes de l'encre pour jet d'encre selon l'une quelconque des revendications 1 à 5 à partir d'une tête d'enregistrement à jet d'encre sur un tissu.

**7.** Procédé d'enregistrement à jet d'encre selon la revendication 6, dans lequel le tissu est un tissu en polyester soumis à un prétraitement acide.

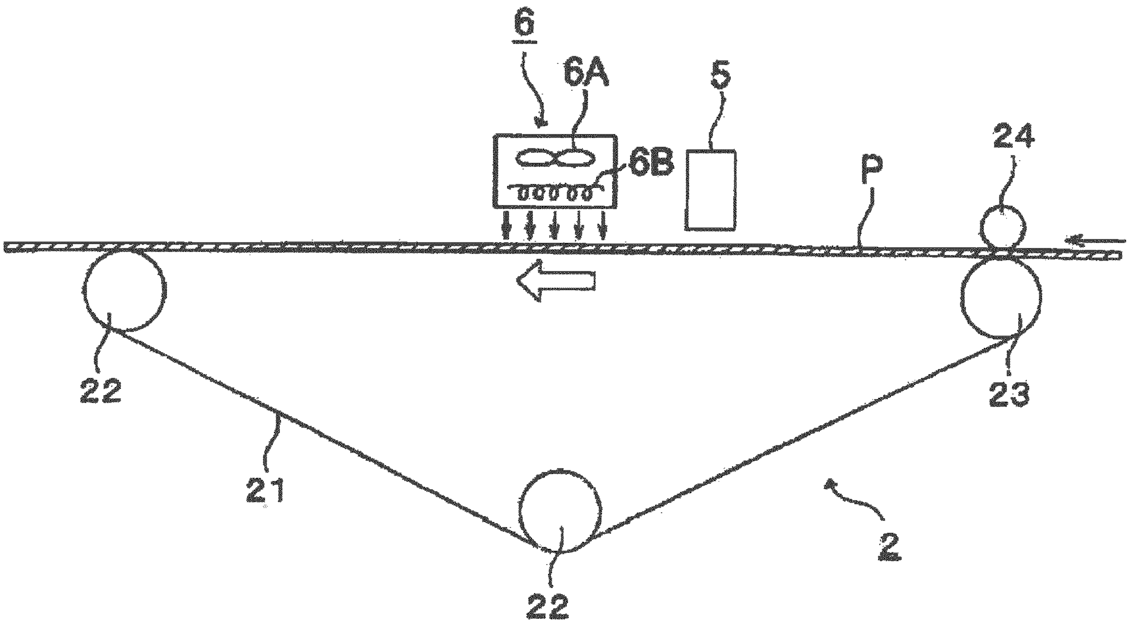


FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008291079 A
- JP 9031380 A
- JP 2007523986 W
- JP 8048906 A
- JP 2014015502 A